# EUROPEAN PATENT SPECIFICATION

(11) **EP 0 846 592 B1**
(45) Date of publication and mention of the grant of the patent: **04.09.2002**
(21) Application number: 96830606.8
(22) Date of filing: 04.12.1996
(51) Int. Cl.: B60P 1/00, B60P 1/43

(54) **Equipment with extractable board to get over level differences**
Vorrichtung mit herausziehbarer Rampe zur Überwindung von Höhenunterschieden
Dispositif avec plate-forme extractible pour franchir des dénivellations

(43) Date of publication of application: 10.06.1998
(73) Proprietor: Ciocca, Andrea, 24046 Osio Sotto (Bergamo) (IT)
(72) Inventor: Ciocca, Andrea, 24046 Osio Sotto (Bergamo) (IT)
(74) Representative: Vatti, Paolo, Dr. Ing.

(56) References cited:
- GB-A- 433 341
- GB-A- 1 584 253
- US-A- 2 705 081
- US-A- 3 517 791
- US-A- 3 977 545
- US-A- 4 098 414
- US-A- 4 601 632
- US-A- 5 257 894
- US-A- 5 347 672

## Description

This invention relates to an equipment with extractable board to get over level differences according to the characteristics of the preamble of claim 1.

As known, the requirement often arises - in the most different circumstances, for the most varied purposes, and in structures of every type - to get over level differences in a simple and convenient way.

It is known for example how, in all the motorvehicles used for the transport of goods, it is important to be able to dispose of a suitable system allowing to load and unload the goods from said vehicle. If the occasional loading and unloading of a private motorvehicle can also be done by hand, the same operation carried out very often for commercial purposes can be extremely burdensome unless one disposes of a suitable equipment, especially when the goods involved are of considerable weight and bulk.

Similar or even more serious problems arise in the case of motorvehicles used for the transport of handicapped or sick people.

It is equally known how, in everyday life and for more or less long periods of time, the need often arises to get over, or help someone get over, architectural barriers which block the free easy access to public places, such as offices, hotels, hospitals, theatres, churches, stadiums or parts thereof, and even private houses. Generally, in all such cases it is often impossible or unadvisable, for the most different reasons, to get over these barriers with the help of fixed installations, which would practically always involve serious problems in the case of temporary or chronic invalids, sick people and old people.

Many other examples could be made, wherein the even modest level differences between floors or surfaces are apt to create problems and inconveniences when people or goods have to move or be moved from one to the other.

The object of the present invention is to solve these and the further mentioned problems and to eliminate or reduce the above inconveniences by providing a simple and versatile equipment with extractable board, especially for use in mediumsized transport and to get over fairly modest architectural barriers.

By medium-sized transport is here meant the transport normally carried out for short distances, with vans and small lorries, without actually taking into consideration the hand delivery of small parcels - for which no loading/unloading system is required - or the transport of large cargos - for which the loading/unloading systems consist of lift trucks, bridge cranes, jib cranes, and the like. The invention in fact concerns the transport of goods taking up a volume of about one cubic meter - for instance light cases, carboard packages, wheelchairs for invalids, and the like - and the transport of invalids on wheelchairs. In this type of transport, the solution to the loading/unloading problem should be particularly simple, economic and involving very little maintenance, considering also that loading and unloading normally take place between levels which are not so high, i.e. typically between ground or road level and the loading platform of a motorvehicle (for instance a van), with level differences never exceeding one meter and practically always less than that.

Likewise, by fairly modest architectural barriers are here meant stairs, steps, leaps, canals, ditches, pits, and similar barriers, which require to get over level differences never exceeding one meter, and generally below that.

According to known technique, different solutions have been conceived to solve the above problems in the transport field; nevertheless, for most of the equipment set up, the planning choices have opted for the automation of the system, to the detriment of structural simplicity and costs.

For example, the equipment available on the market, to be mounted on the rear side of vans, consists of a platform of suitable size, an edge of which is hooked onto a revolving hydraulic jack. When at rest, the platform is totally housed into the space provided therefor in the van. When having to be used, the platform is rotated about the revolving jack, so as to be moved next to the loading surface, above road level; it is subsequently lowered by hydraulic means, so as to be able to load the goods thereon; and it is finally lifted again by the jack, up to reaching the same level as the loading plane, so as to easily transfer the goods into the van.

A different system - based however on the same principle - is to provide the hatchback door or the side door of vans with at least a pair of hydraulic jacks, apt to lower and lift said doors, which can be simply hinged on the lower side, or more efficiently guided by the jacks according to a more complex motion law.

As can be easily understood, such systems involve considerable complications and costs, often disproportionate to the actual requirements of the user; they are usually mounted upon construction of the vehicle, and they can rarely be mounted at a later stage for subsequently arisen needs. Furthermore, they allow no simplified manual loading and unloading operations.

Always in the transport field, other loading/unloading systems to be mounted on vehicles - which are simpler than the previous ones, but far less versatile than it would be appropriate for the expected requirements - are known, for example, from US-A-3,977,545, from US-A-4,601,632, and from US-A-5,257,894. This document represents the closest prior art according to the characteristics of the preamble of claim 1. Such systems all comprise a flat compartment associated to the loading platform of the vehicle, and a board movable in said compartment thanks to guide means and to slide means allowing said board to be drawn out of the vehicle and be tipped towards the ground. However, the movable board forming part of these systems has an absolutely unsuitable structure (also in the embodiment of US-A-3,977,545, wherein said board is split lengthwise into two side-by-side sections) to be adapted - with the ease required to satisfy the needs mentioned heretofore - to the most varied and changeable conditions in which the loading and unloading operations on light vehicles very often take place.

Finally US-2,705,081 teaches the employ - in an equipment for vehicles with objects similar to those of the invention - of three side-by-side ramps in two sections. However these sections are separated and they need to be mounted and dismounted by hand, separately, every time the loading and unloading operations take place, since they are not apt to be directly inserted into and extracted from a compartment of the vehicles. Therefore such a solution, so as proposed, is not very practical and it must be considered completely obsolete.

For what concerns, instead, getting over architectural barriers - even provisionally - there are known to be no systems suited for the purpose, nor are the systems cited heretofore practical and convenient for this type of use, mostly for the same reasons which make them scarcely fit for use in the transport field.

The present invention is apt to satisfy all the requirements arising from the various problems mentioned above and, favouring simplicity of construction and low production and running costs, it supplies an equipment to get over level differences which is, on one hand, light and easy to handle and, on the other hand, simple and highly flexible in use, said equipment being simultaneously apt to guarantee a most efficient loading and unloading of goods onto and from the loading platform of a motorvehicle, and/or to allow getting over architectural barriers.

Said equipment to get over level differences, of the type consisting of a fixed flat compartment and of a board movable in said compartment thanks to guide means and to slide means allowing the extraction and inclination thereof, is characterized in that said board is split lengthwise into more than two side-by-side independent ramps, some at least of which are formed by several sections apt to be longitudinally interconnected, and in that, the first section of each of said ramps of the board is hinged onto a saddle sliding into said compartment, from which said section can be extracted by sliding and in respect of which it can be inclined, the other sections of each ramp being fitted into said first section. Suitably a section of each ramp of the board is formed with an intermediate articulation in correspondance of which a tilting and adjustable bearing stand is provided.

The equipment according to the invention, as defined above, can have a great variety of uses, but is particularly suited both for loading and unloading goods from motorvehicles provided with a loading platform - in which case said fixed flat compartment is associated to said platform, and the movable board is extracted and inclined outwardly of the vehicle, up to resting its end part onto the ground - and for getting over architectural barriers between treading surfaces of different levels - in which case said fixed flat compartment is associated to the highest of said treading surfaces, and said movable board is extracted and inclined up to resting its end part onto the lowest of said treading surfaces.

Further characteristics and advantages of the equipment according to the present invention will anyhow be more evident from the following detailed description of some preferred embodiments thereof, given by way of example and illustrated on the accompanying drawings, in which:
Fig. 1 is a perspective view, with some parts removed, of a motorvehicle comprising the equipment of the invention, wherein some possible configurations of the ramps of the movable board are illustrated by way of example;
Fig. 2 shows the mounting of the first section of one of the ramps of the movable board into the fixed compartment of the equipment according to the invention;
Fig. 3 is a side view showing the use of a first simple embodiment of the movable board forming part of the equipment of the invention;
Figs. 4 and 5 are side views showing two different uses of a second embodiment of said movable board;
Figs. 6 and 7 are side views showing two different uses of a third embodiment of said movable board;
Fig. 8 shows a system to interconnect two sections of one of the ramps of said movable board;
Fig. 9 is a cross section view along the line II-II of fig. 8;
Fig. 10 shows diagrammatically some configurations of the equipment according to the invention, in use;
Fig. 11 is a perspective view, with some parts removed, of the equipment according to the invention - used to get over architectural barriers and applied on the threshold of a building having two entrance steps - wherein some possible configurations of the ramps of the board are illustrated by way of example; and
Fig. 12 is a lateral section view of an equipment similar to that shown in fig. 11.

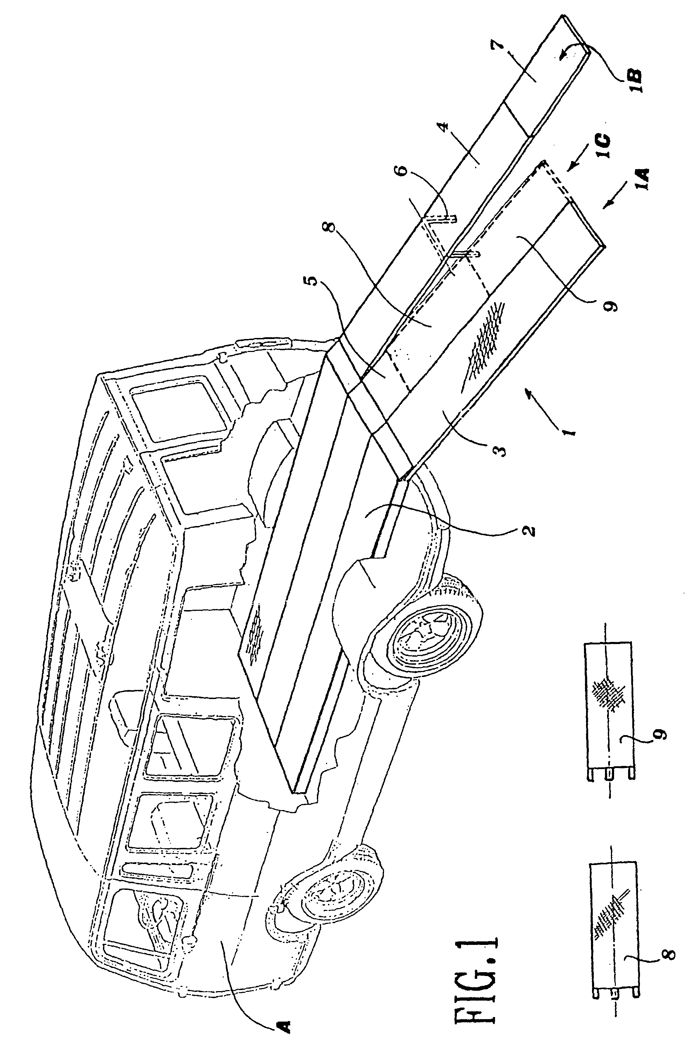

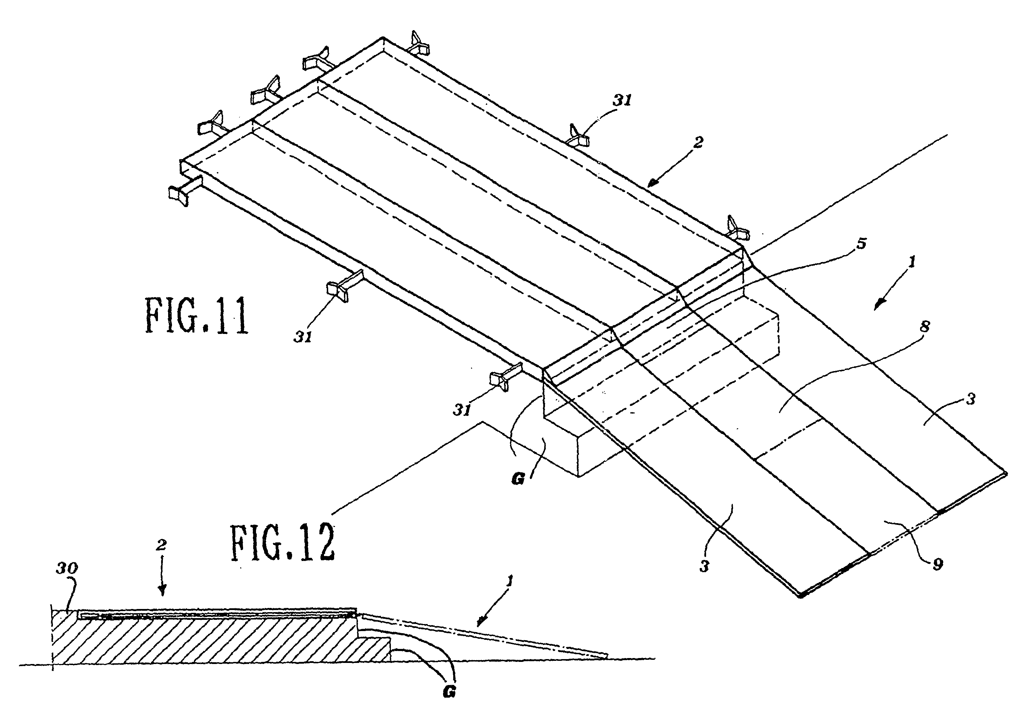

As shown on the drawings, the equipment according to the present invention - consisting of a few fundamental elements which make it economic, of simple use, versatile and easy to handle - essentially comprises, as already pointed out, a fixed flat compartment and a board movable in said compartment, so as to be extracted therefrom and inclined (figs. 1 and 11) towards ground level.

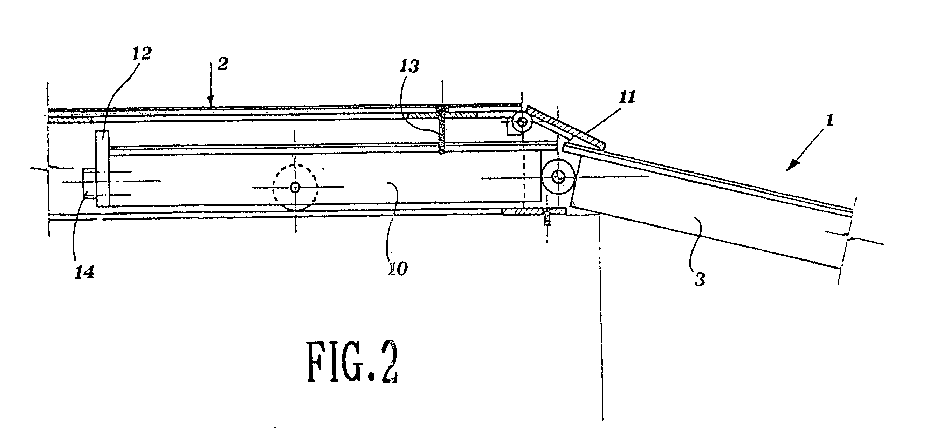

In the embodiments of figs. 1 to 10, the equipment according to the invention comprises a flat movable board 1 (shown in fig. 1 in an extracted position) and a fixed compartment 2, associated to the loading platform of a motorvehicle A, said board 1 being housed into said compartment 2 by way of slide means. The top surface of the compartment 2 can form itself - as shown in figs. 1 and 2 - the loading platform of the vehicle. Alternatively, the compartment 2 could be inserted under the loading platform of the vehicle, or mounted over the same. In any case the board 1, when it is fully withdrawn into the compartment 2, by no means interferes with the goods loaded on the vehicle.

According to the invention, the board 1 is split lengthwise into three side-by-side independent ramps 1A, 1B and 1C. Each ramp can be formed by one or more sections, apt to be longitudinally interconnected.

Fig. 1 shows three different types of ramps suited to form - by associating ramps of equal or different type - the board according to the present invention, and precisely: a ramp 1A consisting of a single section 3 of length suited to form a board of average inclination; a ramp 1B consisting of a first section 4, similar to the ramp section 3 but provided with an intermediate bearing stand 6, and of a second section 7 longitudinally associated to said first section 4 by being fitted into its front end, so as to form an extended board of reduced inclination; and a ramp 1C consisting of a short section 5 and of two sections 8 and 9, longitudinally associated to said section 5 by being fitted one into the other at their front end, so as to form a board more or less of the same length as the board obtained with the first ramp 1A. The sections 8 and 9 can also be associated to the section 3, or they can replace the section 7. They may even be removed from the section 5, so as to reduce the board 1 into a track formed only by the lateral ramps 1A and 1B.

The first section (3, 4 or 5) of each of said ramps of the board is hinged onto a saddle 10 (fig. 2) sliding into the compartment 2 and it can be extracted from said compartment - housing it with the saddle (10) - by sliding, and then be inclined in respect thereof for use. Fig. 2 also shows: a union plate 11, pivoted to the top surface of the compartment 2 acting as loading platform and joining said surface with the surface of the ramp 1; a keep plate 12 for the saddle 10, apt to cooperate with a check pin 13 to stop the outlet of the ramp 1; and a rubber pad 14 mounted at the inner end of the saddle 10, to act as shock absorber for said saddle when the board 1 withdraws into the compartment 2.

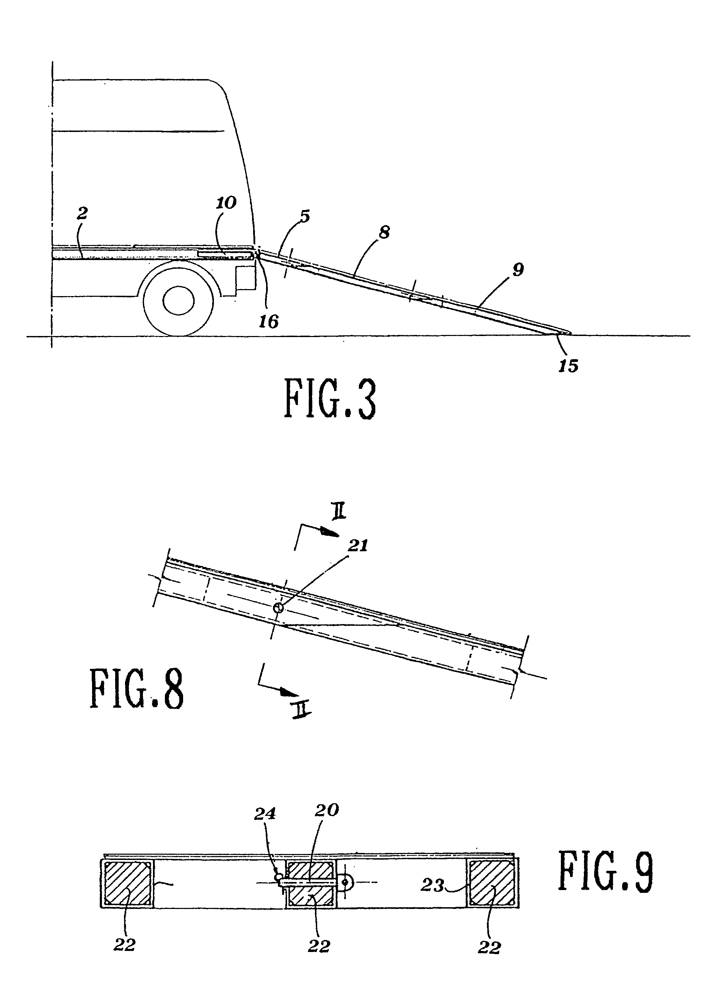

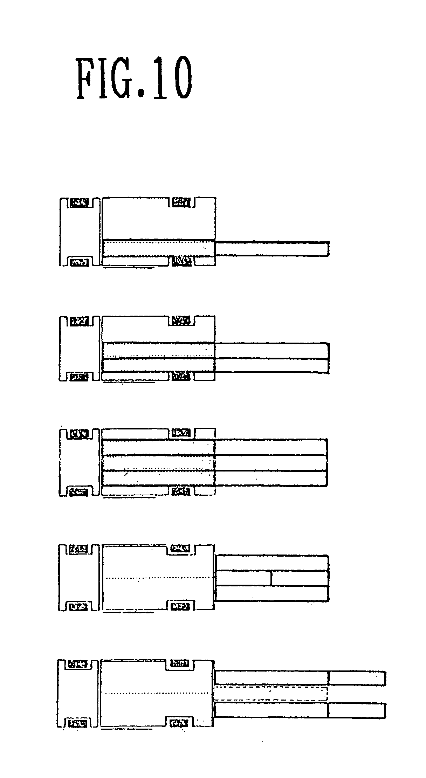

In fig. 3 the board comprises three ramps of a very simple type, formed by longitudinally associating three sections - as the sections 5, 8 and 9 of fig. 1 - fitted one into the other at their front end; said association can be obtained in any manner, as illustrated hereinafter by way of example with reference to figs. 8 and 9. In the board of fig. 3 the ramps are simply rested on the ground with their end 15, being hinged in 16 onto the saddle 10 sliding into the compartment 2.

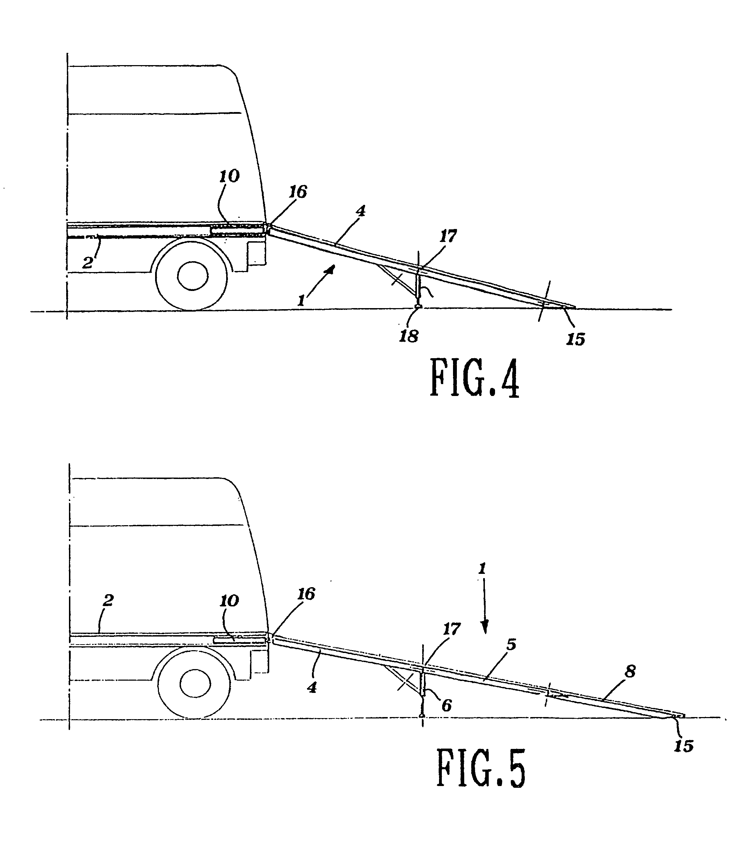

Figs. 4 to 7 show variants of two different and more elaborate embodiments of the board forming part of the equipment according to the invention.

In the embodiment of fig. 4 each ramp of the board is formed by a single section 4, hinged in 16 onto the saddle 10 and provided with an intermediate bearing stand 6, articulated in 17 so as to be variably inclined, and adjustable in height by screwing in 18, so as to obtain a correct bearing of the ramp end 15.

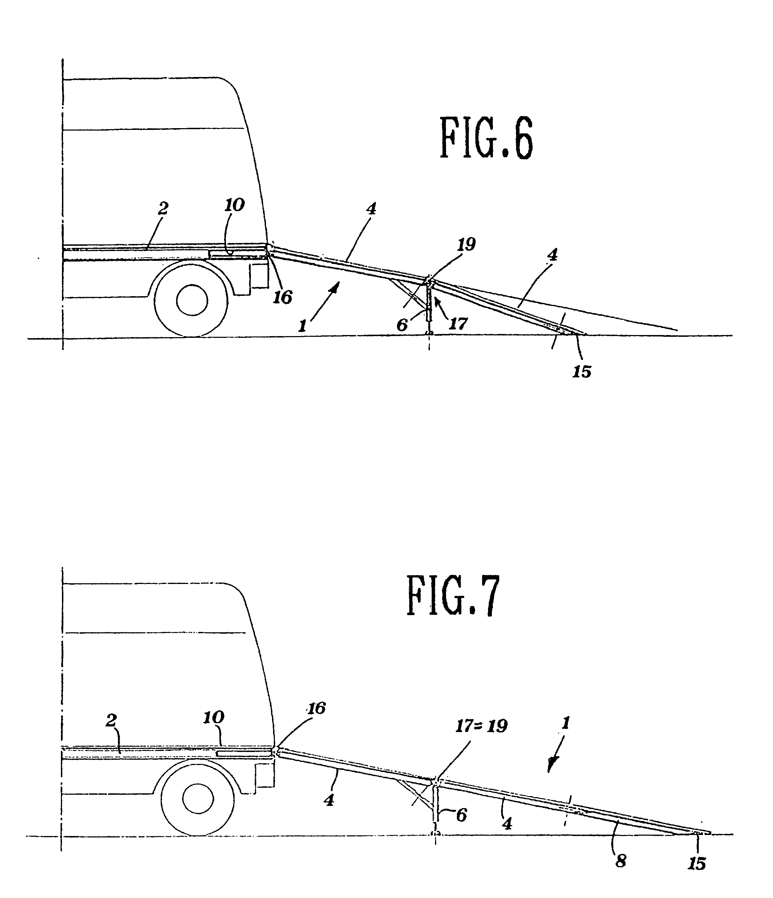

The embodiment of fig. 5 is similar to that of fig. 4, but for adding to the section 4 of the ramps a further section 8 fitted therein, so as to reduce the inclination of the board 1.

Figs. 6 and 7 illustrate two variants of the embodiments of figs. 4 and 5, wherein the boards have even more elaborate features obtained by forming the section 4 of each ramp with an intermediate articulation 19 in correspondence of the articulation point 17 of the stand 6. Said intermediate articulation allows to automatically vary the inclination of the end part of the section 4 of each ramp of the board 1, so as to adapt it at once to the ground, even in the presence of level differences.

Figs. 8 and 9 illustrate - as already mentioned - means to connect the different sections of a same ramp in the equipment according to the invention. Such means consist of simple pins 20, being inserted into corresponding holes 21 provided in connecting bars 22 of one section and in tubular rods 23 of the other section, dimensioned so as to house said bars. The pins 21 can be safety locked by way of split pins 24.

Figs. 11 and 12 show the embodiment of the equipment according to the invention meant to be applied on the threshold of a building having two entrance steps G. It comprises a movable flat board 1 (shown in an extracted position) and a fixed compartment 2, which is stably associated - in the embodiment illustrated - to the upper treading surface 30, by being incorporated into the building structure and anchored thereto by means of clamps 31. Alternatively, the compartment 2 could be stably associated in some other way, or else removably associated by suitable means like screws or brackets, or it could even be simply laid to rest preferably on the upper treading surface of the building entrance.

According to the invention, and as in the case of the equipment shown in fig. 1, the board 1 is split lengthwise into three side-by-side independent ramps. Each ramp can be formed by one or more sections, longitudinally interconnected.

Also fig. 11 shows two different types of ramps suited to form - by associating ramps of equal or different type - the board according to the present invention, and precisely: the two lateral ramps consisting of a single section 3 of length suited to form a board of average inclination, and the central ramp consisting of a short section 5 and of two sections 8 and 9, longitudinally associated to said section 5 by being fitted one into the other at their front end, so as to form a board more or less of the same length as the board obtained with the lateral ramps. The sections 8 and 9 could even be removed from the section 5, so as to reduce the board 1 into a track formed only by the lateral ramps; likewise, said sections could be associated to the section 3 of the lateral ramps to reduce the inclination thereof.

In the embodiment used to get over architectural barriers, the board 1 can of course also be positioned horizontalwise, to connect two treading surfaces placed on the same level, but parted by an obstacle, as a channel or ditch.

For simplicity and economy of construction, all the components of the equipment according to the invention can be formed by forging or extrusion of an aluminium alloy, thereby obtaining a good structural strength combined with a suitable lightness.

The equipment according to the invention, which requires no automation nor any source of energy, is caused to work - when having to eliminate the level difference between the loading platform of a motorvehicle and the ground, or between two treading surfaces parted by architectural barriers - by manually extracting the various ramps of the board 1 from the compartment 2, thanks to sliding of the respective saddles 10, and then resting on the ground the outer ends of said ramps. According to the type of board available, and to the requirements arising each time, one will then have to act on the various additional components, as the supplementary sections and respective locking means, the bearing stand and any other accessories which may be provided. It will thus be possible to form the board of required length and inclination.

In all its embodiments, once its use is over, the board 1 can be very easily withdrawn into the compartment 2, after removal - where required - of any additional sections associated by fitting into the fixed sections of the board.

From the above, it can be easily understood that the equipment according to the invention is highly versatile for what concerns the length of the board 1, the inclinations which said board can take up, and the actual configuration of the board. A particularly significant example of these properties is shown in fig. 10 which diagrammatically and only partially illustrates, in a series of plan views of a motorvehicle including the equipment of the invention, the possibilities provided by said equipment. In said figure, starting from the top, the board comprises: a single lateral ramp; two side-by-side equal ramps; three side-by-side equal ramps; three side-by-side ramps, of which the central one has a different configuration from the other two; two lateral extended ramps forming a track. Several other arrangements can of course be conceived, by differently combining the characteristics and dimensions of the various components forming the equipment, even within each single equipment: for instance, to switch over from the fourth to the fifth configuration of fig. 10, it is sufficient to use the two sections forming the central ramp in the fourth configuration as sections to extend the lateral ramps in the fifth configuration.

Equally evident are the simplicity of construction and easiness of use of the equipment according to the invention, which successfully combine with its versatility, at extremely convenient costs.

It is anyhow understood that the invention is not limited to the particular embodiments described heretofore, which merely represent non-limiting examples thereof, but that several other embodiments and modifications could be obtained, all within reach of a person skilled in the art, without thereby departing from the scope of the present invention.

It is equally understood that the equipment according to the invention could be easily used for purposes other than those described and illustrated heretofore and, in particular, it could be mounted on different vehicles, as for instance trains, airplanes, or water crafts.

## Claims

1. Equipment to get over level differences, of the type consisting of a fixed flat compartment (2) and of a board (1) movable in said compartment thanks to guide means (5) and to slide means (6) allowing the extraction and inclination thereof, **characterized in that**, said board (1) is split lenghtwise into more than two side-by-side independent ramps (1A, 1B, 1C), some at least of which are formed by several sections (3, 4, 5, 7, 8, 9) apt to be longitudinally interconnected and **in that**, the first section (3, 4, 5) of each of said ramps (1A, 1B, 1C) of the board (1) is hinged onto a saddle (10) sliding into said compartment (2), from which said section can be extracted by sliding and in respect of which it can be inclined, the other sections of each ramp being fitted into said first section.

2. Equipment as in claim 1), wherein a section (4) of each ramp of the board is formed with an intermediate articulation (19) in correspondence of which a tilting and adjustable bearing stand (6) is provided.

3. Equipment as in claims 1) and 2) wherein said compartment (2) comprises, on the board extraction side, an inclinable union plate (11).

4. Equipment as in claims 1) to 3) for loading and unloading freights in motorvehicles provided with a loading platform, wherein said fixed flat compartment (2) is associated to said loading platform, and said movable board (1) is extracted and inclined outwardly of the vehicle up to resting its end part on the ground.

5. Equipment as in claims 1) to 3) for getting over architectural barriers between treading surfaces of different levels, wherein said fixed flat compartment (2) is associated to the highest of said treading surfaces, and said movable board (1) is extracted and inclined up to resting its end part onto the lowest of said treading surfaces.

## Patentansprüche

1. Vorrichtung zum Überwinden von Höhenunterschieden, der Bauart bestehend aus einem feststehenden ebenen Fach (2) und aus einer Platte (1), die in dem Fach mit Hilfe einer Führungseinrichtung (5) und Schiebemitteln (6) bewegbar ist, die deren Ausziehen und Neigen ermöglichen, **dadurch gekennzeichnet, daß** die genannte Platte (1) in Längsrichtung in mehr als zwei nebeneinanderliegende unabhängige Rampen (1A, 1B, 1C) aufgeteilt ist, von denen zumindest einige durch mehrere Abschnitte (3, 4, 5, 7, 8, 9) gebildet sind, die sich dazu eignen, in Längsrichtung miteinander verbunden zu werden, und wobei der erste Abschnitt (3, 4, 5) einer jeden der genannten Rampen (1A, 1B, 1C) der Platte (1) auf einer Auflage (10) angelenkt ist, die in das Fach (2) verschieblich ist, aus dem der genannte Abschnitt durch Verschieben herausgezogen werden kann und in Bezug auf das er geneigt werden kann, wobei die anderen Abschnitte einer jeden Rampe in den genannten ersten Abschnitt eingesetzt sind.

2. Vorrichtung nach Anspruch 1, **dadurch gekennzeichnet, daß** ein Abschnitt (4) einer jeden Rampe der Platte mit einem zwischenliegenden Gelenk (19) versehen ist, in Bezug auf welches eine klapp- und einstellbare Lagerungsstütze (6) vorgesehen ist.

3. Vorrichtung nach Anspruch 1 oder 2, **dadurch gekennzeichnet, daß** das Fach (2) auf der Seite des Plattenauszugs eine neigbare Verbindungsplatte (11) aufweist.

4. Vorrichtung nach einem der Ansprüche 1 bis 3 zum Be- und Entladen von Lasten in Motorfahrzeugen, die mit einer Ladeplattform versehen sind, wobei das genannte feststehende ebene Fach (2) der Ladeplattform zugeordnet ist, und wobei die bewegbare Platte (1) herausgezogen und außerhalb des Fahrzeugs soweit geneigt ist, daß sie mit ihrem Endabschnitt auf dem Boden aufliegt.

5. Vorrichtung nach einem der Ansprüche 1 bis 3, um architektonische Hindernisse zwischen Trittflächen unterschiedlicher Höhe zu überwinden, wobei das genannte feststehende ebene Fach (2) der höchsten der genannten Trittflächen zugeordnet ist, und wobei die genannte bewegbare Platte (1) ausgezogen und soweit geneigt ist, daß sie mit ihrem End-abschnitt auf der untersten der genannten Trittflächen aufliegt.

## Revendications

1. Dispositif pour franchir des dénivellations, du type consistant en un compartiment plat fixe (2) et en une plate-forme (1) mobile dans ledit compartiment grâce à un moyen de guidage (5) et à un moyen de glissement (16) permettant son extraction et son inclinaison, **caractérisé en ce que** ladite plate-forme (1) est divisée dans le sens de la longueur en plus de deux rampes indépendantes côte à côte (1A, 1B, 1C), au moins certaines des rampes étant formées par plusieurs sections (3, 4, 5, 7, 8, 9) adaptées à être reliées les unes aux autres longitudinalement et **en ce que** la première section (3, 4, 5) de chacune desdites rampes (1A, 1B, 1C) de la plate-forme (1) est articulée sur une sellette (10) glissant dans ledit compartiment (2), duquel ladite section peut être extraite par glissement et par rapport auquel elle peut être inclinée, les autres sections de chaque rampe étant emboîtées dans ladite première section.

2. Dispositif selon la revendication 1, dans lequel une section (4) de chaque rampe de la plate-forme est dotée d'une articulation intermédiaire (19) en correspondance de laquelle un pied de support réglable et rabattable (6) est prévu.

3. Dispositif selon les revendications 1 et 2, dans lequel ledit compartiment (2) comprend, sur le côté d'extraction de la plate-forme, une plaque de raccord inclinable (11).

4. Dispositif selon les revendications 1 à 3 pour charger et décharger des marchandises à transporter dans des véhicules à moteur dotés d'une plate-forme de chargement, dans lequel ledit compartiment plat fixe (2) est associé à ladite plate-forme de chargement, et ladite plate-forme mobile (1) est extraite et inclinée vers l'extérieur du véhicule jusqu'à ce que sa partie d'extrémité repose sur le sol.

5. Dispositif selon les revendications 1 à 3 pour franchir des obstacles architecturaux entre des surfaces de roulement de niveaux différents, dans lequel ledit compartiment plat fixe (2) est associé à la plus haute desdites surfaces de roulement, et ladite plate-forme mobile (1) est extraite et inclinée jusqu'à ce que sa partie d'extrémité repose sur la plus basse desdites surfaces de roulement.
